# DEMANDE DE BREVET EUROPEEN

(11) **EP 2 429 154 A1**
(43) Date de publication de la demande: **14.03.2012**
(21) Numéro de dépôt: 10305967.1
(22) Date de dépôt: 09.09.2010
(51) Int. Cl.: H04M 1/02, H04M 1/725, G06K 19/077, H04B 1/38

(54) **Boîtier d'alimentation pour appareil de communication**

(71) Demandeur: Gemalto SA, 92190 Meudon (FR)
(72) Inventeur: Caruana, Jean-Paul, 13009, Marseille (FR); Fidalgo, Jean-Christophe, 13420, Gemenos (FR)

(57) **Abrégé**

L'invention concerne un boîtier d'alimentation (1) pour appareil de communication (5), ledit boîtier comportant une batterie (B1), un contrôleur NFC (2), une antenne radiofréquence (A1), des moyens de gestion d'alimentation (4) du contrôleur NFC reliés ou étant configurés pour pouvoir être relier à la batterie et/ou à une antenne radiofréquence ;

Le boîtier se distingue en ce qu'il comprend un moyen d'interconnexion ou une interface physique (3) pour relier le contrôleur NFC à un module à circuit intégré distinct du support.

## Description

L'invention concerne un boîtier d'alimentation pour appareil de communication.

En particulier, l'invention concerne un boîtier de batterie comprenant un module radiofréquence de proximité NFC (Near Field Communication en anglais) intégrés dedans ou fixés sur le boîtier.

Plus particulièrement, le boîtier est du type comportant une batterie, un contrôleur NFC, une antenne radiofréquence, des moyens d'alimentation du contrôleur NFC reliés ou étant configurés pour pouvoir être reliés à la batterie et/ou à une antenne radiofréquence.

Actuellement, il est difficile d'apporter une fonction NFC à un téléphone qui est dépourvu d'un contrôleur NFC. C'est d'autant plus difficile si on souhaite un lien SWP (Single Wire Protocol) entre le contrôleur NFC et la SIM du téléphone portable.

Des tentatives visant à ajouter un circuit NFC à postériori se heurtent souvent à un impact néfaste plus ou moins imprévisible de la batterie du téléphone sur les caractéristiques radiofréquences de la fonction NFC.

Elles se heurtent également à des problèmes de dimensions et/ou d'espace disponible dans le téléphone pour intégrer un circuit NFC.

L'invention a pour objectif de résoudre les inconvénients ci-dessus. L'invention propose également des fonctionnalités supplémentaires de la batterie pour un usage indépendant du mobile.

A cet effet, l'invention a pour objet un boîtier d'alimentation pour appareil de télécommunication ou communication, ledit boîtier comportant une batterie, un contrôleur NFC, une antenne radiofréquence, des moyens de gestion d'alimentation du contrôleur NFC reliés ou étant configurés pour pouvoir être reliés à la batterie et/ou à une antenne radiofréquence ;
Le boîtier se distingue en ce qu'il comprend un moyen d'interconnexion ou une interface physique reliant le contrôleur NFC à un module à circuit intégré distinct du support.

Selon d'autres caractéristiques de l'invention:
- Ledit module à circuit intégré est un module d'identification d'abonné (SIM) ou une carte ou un dispositif à mémoire de masse, par exemple une carte SD;
- Le moyen d'interconnexion (CO) ou interface physique est amovible et comporte un premier connecteur pour connecter d'une part le contrôleur NFC et d'autre part un second connecteur pour connecter un module d'identification d'abonné (SIM);
- Le moyen d'interconnexion (CM) comporte au moins deux seconds connecteurs pour connecter un module SIM, lesdits seconds connecteurs étant orientés à 90 ° l'un par rapport à l'autre ;
- Le boîtier est équipé (ou muni) d'au moins deux moyens d'interconnexion amovibles et séparés dont les seconds connecteurs sont orientées à 90 ° l'un par rapport à l'autre de manière à pouvoir connecter au choix des modules SIM quelles que soient les orientations existantes dans l'appareil de télécommunication ;
- Le boîtier comporte un premier logement pour recevoir et connecter un module SIM à l'intérieur soit de façon fixe (par exemple soudé), soit de manière amovible / détachable ;
- Le boîtier comporte des connexions externes à la batterie permettent une post-personnalisation électrique du module SIM, lesdites connexions reliant des points de connexion du module SIM;
- l'antenne (A1) est optimisée aux dimensions de la batterie en couvrant la quasi-totalité de la surface principale (S) de la batterie et se trouve ajustée / et accordée en fonction de la batterie.
- L'invention permet un fonctionnement en mode « batterie ON » permanent.
- L'invention permet une intégration pleinement prévisible et caractérisée avant d'introduire le système NFC dans le téléphone.
- L'invention permet la garantie d'un fonctionnement optimisé du système NFC dans le mobile.

L'invention est décrite en relation avec des exemples illustrés sur les figures suivantes:
- La figure 1 illustre un système NFC souple F de l'art antérieur;
- La figure 2 illustre le système F en cours d'insertion dans un appareil de télécommunication 5;
- La figure 3 illustre le système NFC (E) de l'invention en vue éclatée en cours d'intégration dans un boîtier de batterie;
- La figure 4 illustre le boîtier intégrant le système E et exposant un connecteur 13 externe par exemple à un moyen d'interconnexion C0 d'une des figure 5a-5d ;
- Les figure 5a à 5d illustrent des moyens d'interconnexion comportant une première partie identique entre eux pour une connexion au connecteur 23 du système NFC (E) et une seconde partie comportant un connecteur à une carte SIM ; les différentes secondes parties sont décalées de 90° l'une par rapport à l'autre;
- La figure 5m illustre un moyen d'interconnexion comportant deux seconds connecteurs de type C0 et C90.

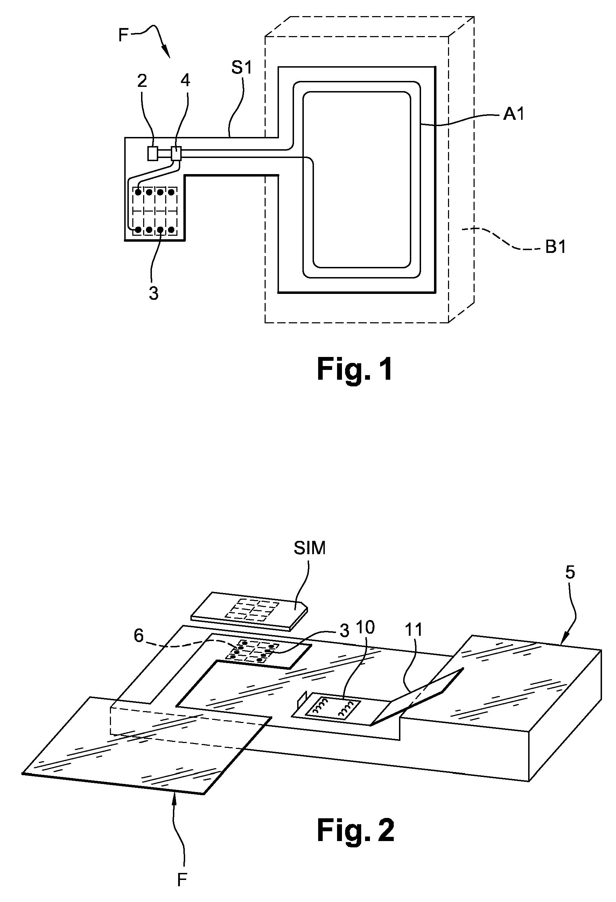

La figure 1 illustre un système NFC souple de l'art antérieur ; il comprend un support souple S1 portant une antenne radiofréquence A1, un contrôleur NFC (2), des moyens de gestion d'alimentation (4) du contrôleur NFC reliés ou étant configurés pour pouvoir être reliés à la batterie et/ou à une antenne radiofréquence, un connecteur 3, 6 à plages et plots de contact respectivement débouchant ou sur une des deux faces principales d'une partie destinée à venir s'interfacer entre un connecteur 10 d'appareil de télécommunication (connecteur à lames ou ressorts) 5 pour module SIM et des plages de contact du module SIM. L'appareil peut être aussi un appareil de communication comme un assistant personnel ou tout appareil à batterie et à contrôleur que l'on souhaite doté de moyens de communication sans contact.

Ce système (S1) vient se loger dans l'appareil de télécommunication 5, l'antenne étant plaquée contre la batterie B1. Les dimensions externes de l'antenne sont en général nettement inférieures à la surface principale S de la batterie. En outre, l'antenne n'est pas parfaitement accordée en fonction du type de batterie, d'une masse d'accumulateur formant la batterie.

A la figure 2, on voit que le système NFC souple (F) est en cours d'insertion dans un appareil de télécommunication 5. La partie connecteur 3, 6 est destinée à s'interfacer entre le connecteur 10 du mobile 5 et un module SIM maintenu par un organe de maintien ou volet 11 en contact avec le connecteur 10. La partie de l'antenne A1 se plie de manière flexible et se place contre la surface principale de la batterie (B1).

Dans un autre mode de réalisation le module SIM peut être remplacé par un module ou carte ou composant soudé ou détachable d'un connecteur d'un appareil de communication.

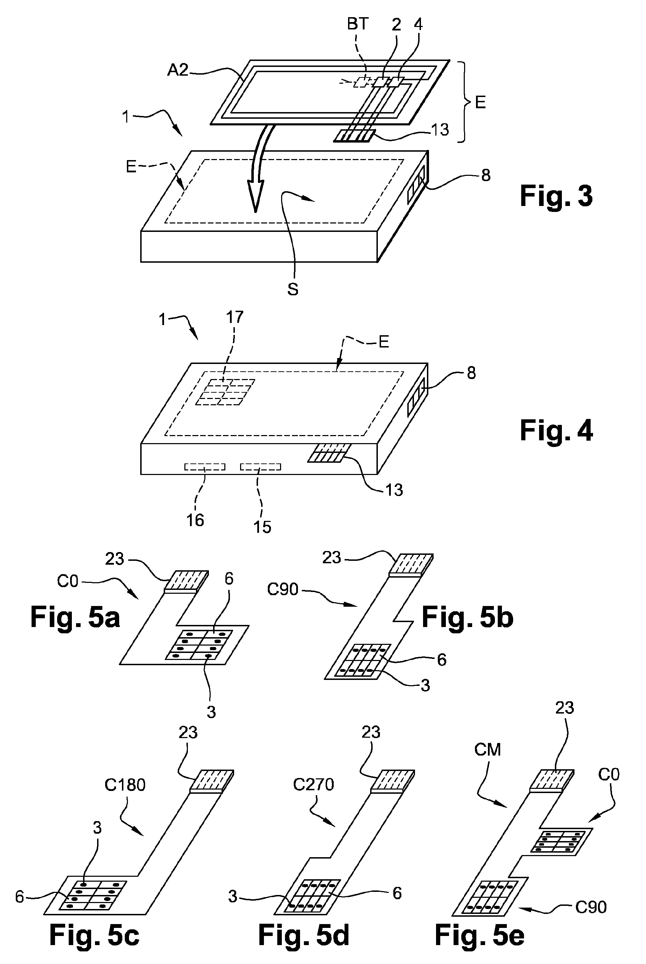

A la figure 3 est illustré un mode de réalisation de l'invention. L'invention a pour objet un boîtier d'alimentation (1) pour appareil de télécommunication (5) comprenant une batterie (B1) dans le boîtier ; le boîtier comprend aussi un contrôleur NFC (2) de manière intégrée, une antenne radiofréquence (A1), des moyens de gestion d'alimentation (4) du contrôleur NFC reliés ou étant configurés pour pouvoir être reliés à la batterie et/ou à une antenne radiofréquence.

L'ensemble E ci-dessus (en pointillé) peut être intégré dans le boîtier 1 de batterie de différentes manières suivantes. Par exemple, les éléments ci-dessus sont réalisés sur un substrat isolant positionné sur un matériau assurant une fermeture des lignes de champs (ferrite, métal...) puis le substrat est enrobé par du plastique formant le boîtier.

En alternative, l'antenne est déposée par jet de matière sur une face principale du boîtier plastique S de la batterie puis, les composants sont reportés et connectés à l'antenne et un vernis ou une matière de recouvrement recouvre l'ensemble.

Selon une caractéristique de ce mode de réalisation, le boîtier comprend un moyen d'interconnexion ou une interface physique 13 pour relier le contrôleur NFC à un module d'identification d'abonné (SIM). Dans l'exemple, à la figure 4, le connecteur 13 de type mâle, est en excroissance par rapport à la surface externe de la batterie. Le connecteur 13 est de préférence souple. Dans une autre réalisation, le connecteur 13 peut reposer à l'extrémité d'une cavité ménagée dans le plastique d'enrobage de la batterie ou déboucher dans une cavité dans une enveloppe de la batterie.

Dans un mode préféré de réalisation, la batterie NFC est reliée au logement de la carte SIM par l'intermédiaire d'un circuit souple. Ce circuit souple est amovible / dé-connectable de la batterie notamment au niveau du connecteur 13) afin de pouvoir l'interchanger avec un autre circuit souple mieux adapté au format ou agencement du téléphone visé en ce qui concerne l'orientation du connecteur de carte SIM dans le téléphone.

Selon un mode de réalisation à la figure 5a, le moyen d'interconnexion (CO) ou interface physique est amovible et comporte un premier connecteur 13 pour d'une part connecter le contrôleur NFC (2) ; Le moyen d'interconnexion C0 comporte d'autre part un second connecteur 3, 6 pour connecter un module d'identification d'abonné (SIM) et le connecteur 5 du téléphone portable 10.

Ainsi, il est possible de mettre en oeuvre aisément ou pas la fonction NFC simplement par une connexion de la batterie au module SIM.

De manière avantageuse, l'antenne (A1) est optimisée aux dimensions de la batterie en couvrant la quasi-totalité de la surface principale (S) de la batterie et se trouve ajustée / et accordée en fonction de la batterie. L'antenne est intégrée de manière rigide dans le boîtier.

Aux figures 5b à 5d, les moyens d'interconnexion comprennent des seconds connecteurs 3, 6 décalés respectivement de 90 ° l'un par rapport à l'autre, ainsi le second connecteur 3, 6 du moyen d'interconnexion C90 est orienté à 90 ° par rapport au connecteur 23 du moyen d'interconnexion C0 ; le second connecteur 3, 6 du moyen d'interconnexion C180 est orienté à 90° par rapport au connecteur 23 du moyen d'interconnexion C90 ; et le second connecteur 3, 6 du moyen d'interconnexion C270 est orienté à 90° par rapport au connecteur 23 du moyen d'interconnexion C180.

A la figure 5e, le moyen d'interconnexion (CM) comporte au moins deux seconds connecteurs C0, C90 branchés en parallèle et orientés à 90 ° l'un par rapport à l'autre.

Selon un autre mode de réalisation, le boîtier est fourni avec un ou plusieurs moyens d'interconnexion ; Le boîtier peut être associé à un ou au moins deux moyens d'interconnexion (C0, C90, C180, C270) amovibles et séparés ; Les seconds connecteurs (3, 6) de ces moyens d'interconnexion sont orientées à 90° l'une par rapport à l'autre ; Le connecteur 23 est orienté respectivement à 90° par rapport à C0 et à 180 ° par rapport à C90 ° ; Ces différentes orientations à 90° l'un des connecteurs (C0, C90) par rapport à l'autre permettent de connecter au choix des modules SIM orientés à 90° d'un mobile (5) à l'autre. Le boîtier de batterie convient à un ensemble de mobile et dans cet ensemble se trouvent différentes orientations / configurations du connecteur 10 de module SIM.

Grâce à l'invention, un seul boîtier convient à cet ensemble de mobile. Le boîtier est fourni ou associé avec un ou plusieurs moyens d'interconnexion C0-C180.

Selon une caractéristique, le boîtier peut comporter en outre ou de manière indépendante par rapport aux moyens d'interconnexion C0, un premier logement (15) pour recevoir et connecter un module SIM à l'intérieur soit de façon fixe (par exemple soudé), soit de manière détachable.

De même, le boîtier peut comporter un second logement (16) pour recevoir et connecter une carte à mémoire de masse µSD,

Selon une autre caractéristique en complément ou indépendamment du moyen détachable d'interconnexion C0, le boîtier comporte des connexions externes (17) à la batterie permettent une post-personnalisation électrique du module SIM. Dans l'exemple, ces connexions peuvent être des plages de contact du type carte à puce affleurant à la surface du boîtier.

Ainsi, ces plages de contact en relation de connexion électrique avec un module SIM embarqué sur le boîtier de manière soudé ou non, permettent de personnaliser électriquement le module SIM.

La batterie a un facteur de forme globalement plan et rectangulaire sensiblement comme une carte à puce, ce qui permet de la manipuler dans des machines de personnalisation plus facilement qu'un module SIM de taille plus réduite ou sous forme de microcomposant ou puce de circuit intégré à souder.

Selon une caractéristique venant en complément ou indépendamment du moyen détachable d'interconnexion C0, le boîtier (fig. 3) comprend une interface Bluetooth (BT) pour permettre une communication du contrôleur NFC directement avec des moyens Bluetooth de l'appareil de télécommunication.

La batterie peut être utilisée indépendamment du mobile auquel elle est destinée. Par exemple, une communication téléphonique peut être initiée avec n'importe quel autre téléphone alimenté autrement.

De même une transaction NFC tel un contrôle d'accès ou autre transaction peut être effectuée avec le boîtier de batterie sans être à l'intérieur du mobile. Le cas échéant, le boîtier de batterie est équipé d'un interrupteur (non représenté) pour alimenter ou non le contrôleur NFC au choix de l'utilisateur ; Le boîtier peut éventuellement être utilisé indépendamment du téléphone notamment pour effectuer une transaction sans-contact radiofréquence de proximité.

Différents moyens d'interconnexions électriques connus de l'homme de l'art peuvent convenir pour réaliser les connexions entres les connecteurs 13 et 23. Ici ils sont de type mâle et femelle respectivement ou ils peuvent être inversés. Le connecteur 23 est sous la forme d'un fourreau comportant des pistes à l'intérieur. Des moyens de verrouillage de l'assemblage ou connexion telles que des encoches et protubérances agencées pour coopérer ensemble, peuvent être prévues dans l'un et ou l'autre connecteur 13, 23. Le cas échéant, une ou des perforations sont prévue(s) sur un connecteur 13 de manière à recevoir un ou plusieurs bossage(s) de verrouillage correspondant(s) s'étendant en excroissance dans le fourreau 23 perpendiculairement au plan des éléments CO-C270.

## Revendications

1. Boîtier d'alimentation (1) pour appareil de communication (5), ledit boîtier comportant une batterie (B1), un contrôleur NFC (2), une antenne radiofréquence (A1), des moyens de gestion d'alimentation (4) du contrôleur NFC reliés ou étant configurés pour pouvoir être reliés à la batterie et/ou à une antenne radiofréquence,
**caractérisé en ce qu'**il comprend un moyen d'interconnexion ou une interface physique (3) pour relier le contrôleur NFC à un module à circuit intégré distinct du support.

2. Boîtier selon la revendication précédente, **caractérisé en ce que** ledit module à circuit intégré est un module d'identification d'abonné (SIM).

3. Boîtier selon la revendication précédente, **caractérisé en ce que** ledit moyen d'interconnexion (C0) ou interface physique est amovible et comporte un premier connecteur (33) pour connecter d'une part le contrôleur NFC (2) et d'autre part un second connecteur (3, 6) pour connecter un module d'identification d'abonné (SIM).

4. Boîtier selon l'une quelconque des revendications 2 à 3, **caractérisé en ce que** ledit moyen d'interconnexion (C0) est souple.

5. Boîtier selon la revendication précédente, **caractérisé en ce que** le moyen d'interconnexion (CM) comporte au moins deux seconds connecteurs orientés à 90 ° l'un par rapport à l'autre.

6. Boîtier selon la revendication 3, **caractérisé en ce qu'**il est muni d'au moins deux moyens d'interconnexion (C0, C90, C180, C270) amovibles et séparés dont les seconds connecteurs (3, 6) sont orientés à 90° l'un par rapport à l'autre de manière à pouvoir connecter des connecteurs de modules SIM orientés à 90° l'un par rapport à l'autre dans différents appareils de communication (5).

7. Boîtier selon l'une quelconque des revendications 2 à 6, **caractérisé en ce que** ledit moyen d'interconnexion permet de véhiculer une liaison SWP, une masse ainsi que des signaux Vcc, Vin entre le module SIM et le contrôleur NFC (2).

8. Boîtier selon l'une quelconque des revendications 2 à 7, **caractérisé en ce qu'**il comporte un premier logement (15) pour recevoir et connecter du module SIM à l'intérieur soit de façon fixe (par exemple soudé), soit de manière détachable.

9. Boîtier selon l'une quelconque des revendications précédentes, **caractérisé en ce qu'**il comporte un second logement (16) pour recevoir et connecter une carte à mémoire de masse (µSD).

10. Boîtier selon la revendication 9, **caractérisé en ce qu'**il comporte des connexions externes (17) à la batterie permettant une post-personnalisation électrique du module SIM.

11. Boîtier selon l'une des revendications précédentes, **caractérisé en ce qu'**il comprend une interface Bluetooth (BT) pour permettre une communication du contrôleur NFC avec l'appareil de communication.

12. Boîtier selon l'une des revendications précédentes, **caractérisé en ce que** l'antenne (A1) est optimisée aux dimensions de la batterie en couvrant la quasi-totalité de la surface principale (S) de la batterie et se trouve ajustée / et accordée en fonction de la batterie.
